Europäisches Patentamt

European Patent Office

Office européen des brevets

(11) Publication number: **0 095 882**
**B1**

# (12) EUROPEAN PATENT SPECIFICATION

(45) Date of publication of patent specification: **10.01.90**

(21) Application number: **83302965.5**

(22) Date of filing: **23.05.83**

(51) Int. Cl.⁵: **B 29 C 63/40,** B 65 C 3/08

(54) **A method of and apparatus for applying labels of heat shrink material to articles and articles so wrapped.**

(30) Priority: **27.05.82 US 382374**
**01.11.82 US 438386**
**03.03.83 US 471655**

(43) Date of publication of application:
**07.12.83 Bulletin 83/49**

(45) Publication of the grant of the patent:
**10.01.90 Bulletin 90/02**

(84) Designated Contracting States:
**BE DE FR GB IT**

(56) References cited:
DE-A-2 726 822     US-A-3 555 769
FR-A- 771 005      US-A-3 808 702
GB-A- 879 201      US-A-4 016 706
GB-A-1 453 540     US-A-4 108 710
GB-A-2 023 061     US-A-4 172 873
GB-A-2 088 819     US-A-4 237 675
SU-A- 174 983      US-A-4 272 311

(73) Proprietor: **B. & H. MANUFACTURING COMPANY, INC.**
**3461 Roeding Road**
**Ceres California 95307 (US)**

(72) Inventor: **Hoffmann, Wolfgang**
**3420 Saginaw Court**
**Modesto California 95355 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

This invention relates to method and apparatus and to a system for applying heat shrink film to containers and other particles and also to the end product. By "film" is meant material in sheet form, preferably in the form of a roll from which segments are cut.

More particularly, this invention relates to applying heat shrink film to cylindrical containers although, as will appear, the invention is also applicable to applying heat shrink film to containers which are not cylindrical in shape and to articles other than containers.

Heretofore apparatus and a method have been provided for applying heat shrink film to cylindrical containers by a series of steps as follows.

1. Heat shrink film is formed into a tube slightly larger in diameter than the container to which it is to be applied.

2. The container is preheated or, if the film application is carried on in conjunction with the manufacture of glass containers, the glass containers can be taken from the glass manufacturing operation while they are still hot or warm.

3. The cylindrical sleeve is placed over the container.

4. The sleeve is then heated to shrink it onto the container.

This procedure is elaborate and expensive. Among its disadvantages are the following.

The film material must be preformed into a cylinder rather than being applied directly from a roll of film material to the containers.

The preformed sleeves, since they are larger in diameter than the containers, must be shrunk in their entirety. This requires more heat for shrinking, both because the entire material of the sleeve must be heat shrunk and because the containers themselves must be heated.

Representative of the method and system referred to above is US Patent No 3 822 459.

It is an object of the present invention to provide improvements in the application of sleeves, labels, jackets or the like to containers or other articles, such sleeves, labels or jackets being of heat shrink material.

GB—A—1 453 540 discloses a method, an apparatus and an article corresponding with the prior art portions of claims 1, 19 and 29 respectively. This prior method adhesively secures the entire area of the plastics film to the container and applies heat to the whole area of the film applied to the container. In contrast therewith, the present invention, as defined in claims 1, 19 and 29, obtains a better and more commercially reliable product with a smoothly and accurately applied plastics film label providing a good appearance product with the minimum usage of the film material.

Certain embodiments of the invention are shown by way of example in the drawings, in which:

Figure 1 is a view in side elevation of a pair of chucks mounted on a turret and clamping a cylindrical container onto which a heat shrinkable film is to be shrunk;

Figure 2 is a view of three heat shrink stations on a turret;

Figure 3 is a fragmentary view showing one of the nozzles used for heat shrinking and the manner in which it is blocked at the point where a seam on a heat shrunk label passes by;

Figrue 4 is a similar view at another point where the side seam has passed by the heat shrink station;

Figure 5 is a diagrammatic view of a complete system in accordance with the invention;

Figure 6 is a fragmentary cross sectional view on a larger scale taken at the circled area in Figure 5 of a container and a label showing the seam;

Figure 7 is a view in vertical section through a container transport turret which is a preferred embodiment of the invention;

Figure 8A is a fragmentary view in side elevation of a container between a pair of chucks, such being similar to Figure 7 but with certain parts omitted for simplicity;

Figure 8B is a cross-sectional view of the showing of Figure 8A;

Figures 9A and 9B are similar to Figures 8A and 8B, respectively, but show a different stage of operation; Figure 9B is taken at 9B—9B of Figure 5 and it shows the leading end of the label in cross section;

Figure 10 is a view similar to Figure 9B but taken along line 10—10 of Figure 5 downstream from the stage of operation shown in Figure 9B. Figure 10 shows the machine at the point of glueing the trailing end of the label to the leading end at station E;

Figure 11 is a section through the vacuum drum showing one of the pads used to hold the labels;

Figure 12A is a section along the line 12A—12A of Figure 11;

Figure 12B is a similar section taken at a later stage of operation of the drum;

Figure 13 is a fragmentary view partly in vertical section showing the preferred form of chucks for the crowns of bottles;

Figure 14A is a diagrammatic view showing an alternative arrangement of the tongue shown in Figure 7 and 8A to 10, such being an improvement upon the construction of Figures 7 to 10. In Figure 14A the tongues are shown in retracted position after film has been applied to a container and before the commencement of heat shrinking;

Figure 14B shows the tongues in the act of approaching the film at about the instant that heat shrinking commences; and

Figure 14C shows the tongues in fully advanced positions during heat shrinking;

Figure 15 is a fragmentary diagrammatic view of a preferred embodiment of the heat applicator section of the apparatus. The section shown corresponds to station F of Figure 5;

Figure 16 is a view in elevation of the section shown in Figure 15 such being shown in planar projection.

Figure 17 shows successive stages in the heat shrinking operation at the section shown in Figures 15 and 16; and

Figure 18 is a diagrammatic view of a control system for control of the heater assemblies shown in Figures 15 and 16.

It will be understood that not only labels but also protective sleeves and jackets may be heat shrunk onto containers and other articles and that the containers or other articles need not be cylindrical.

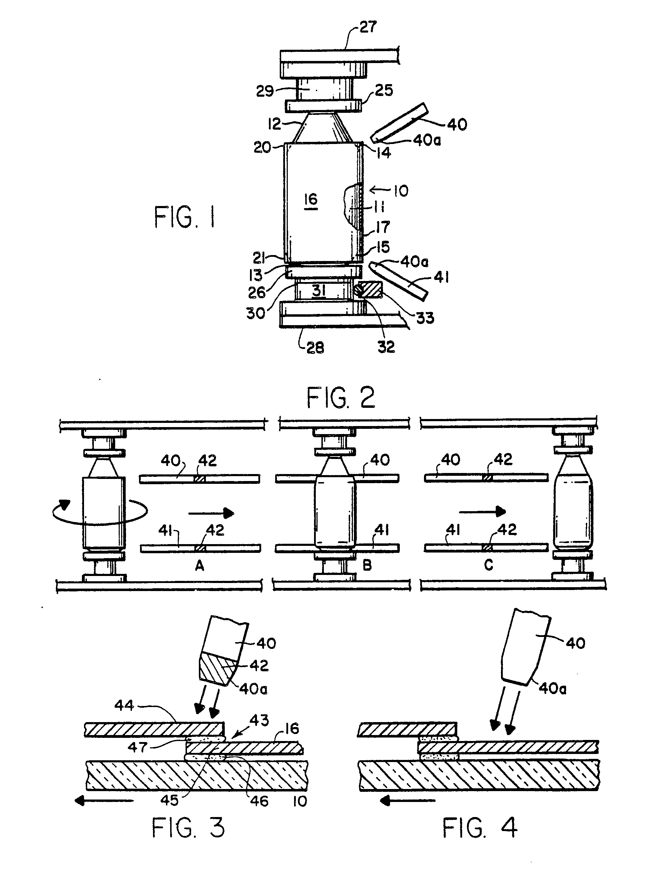

The invention will be described first with reference to Figures 1 to 13.

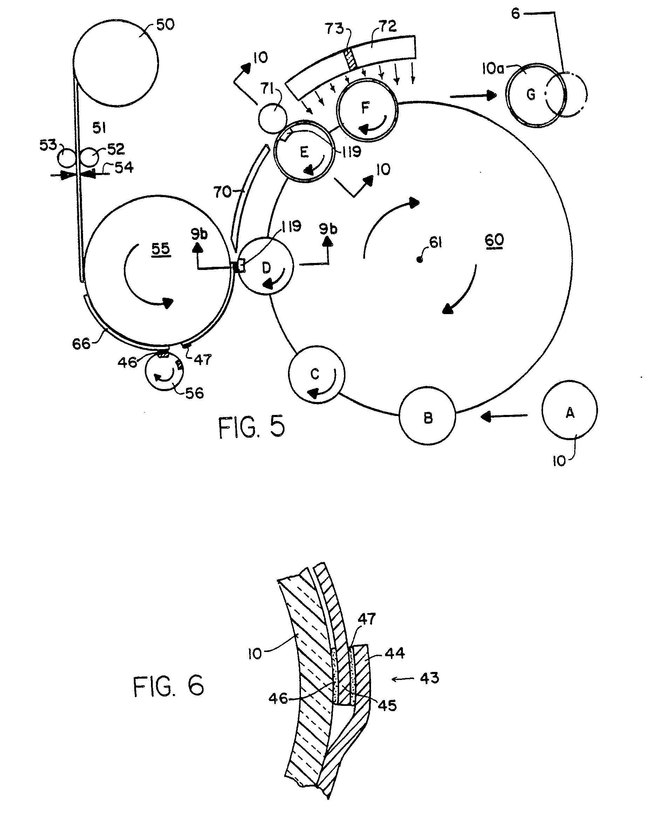

Referring now to Figure 1, a typical cylindrical container 10 is shown. It comprises a cylindrical body 11, an upper conical shoulder 12, a rounded bottom 13, a shoulder section 14 adjoining the cylindrical body 11 and a section 15 of the rounded bottom 13 adjoining the cylindrical body 11. The container 10 may be of glass, metal or plastic, and it is shown as having a heat shrink film 16 applied thereto. The main body portion of this film, indicated by the reference numeral 17 and constituting typically about 80% of the entire film, is tightly fitted onto the container by a conventional labelling operation such as that shown, for example, in U.S. Patent No. 4,108,710. This heat shrinkable film material may be any of a number of materials such as polypropylene, polyethylene, polystyrene foam or polyvinyl chloride. A continuous length of this film material in the form of a roll is provided. (See Figure 5 and the description below). It passes continuously through a cutting station where predetermined lengths are severed, the leading end of each severed length is gripped by a vacuum on a constantly rotating vacuum drum and adhesive is applied to the leading end and the trailing end of each label. As shown in my U.S. Patent No. 4,108,710, a glue line may be applied to the container, the leading end of each label is unglued and is adhered to the container by means of the glue line on the container, and the trailing end of each label is provided with glue and laps over the leading end of the label on the container to form a seam. Preferably, however, as explained in connection with Figure 5 below, glue is applied to both the leading and trailing ends of the label.

It will thus be apparent that the lengths of film are applied to containers by a continuous method as in conventional labelling with, however, the following important differences. A non-heat-shrink material such as a paper label would be applied only to the cylindrical part of the container, that is to say, it would not extend over the curved sections 14 and 15 and would be confined to the cylindrical part of the container. In the present case, the film or label 16 is not so confined. Instead, it projects slightly above and slightly below, e.g. $\frac{1}{4}''$ (6 mm), the cylindrical body 11 of the container such that it projects over the sections 14 and 15 of the shoulder and rounded bottom. If the container or other article to be wrapped has a curvature (i.e. it departs from a cylindrical shape) at only one end, then the film will project only over that end. In the following description and in the drawings, it will be assumed that a container is being wrapped which has a rounded bottom and a conical shoulder and that the film will project at both the top edge and the bottom edge. The projecting portion or portions are not attached to the container and stand free. It will be understood that articles other than containers may be labelled or jacketed.

The upper projecting portion is indicated by the reference numeral 20 and the lower projecting portion is indicated by the reference numeral 21. These projecting portions have an important role as will be explained below.

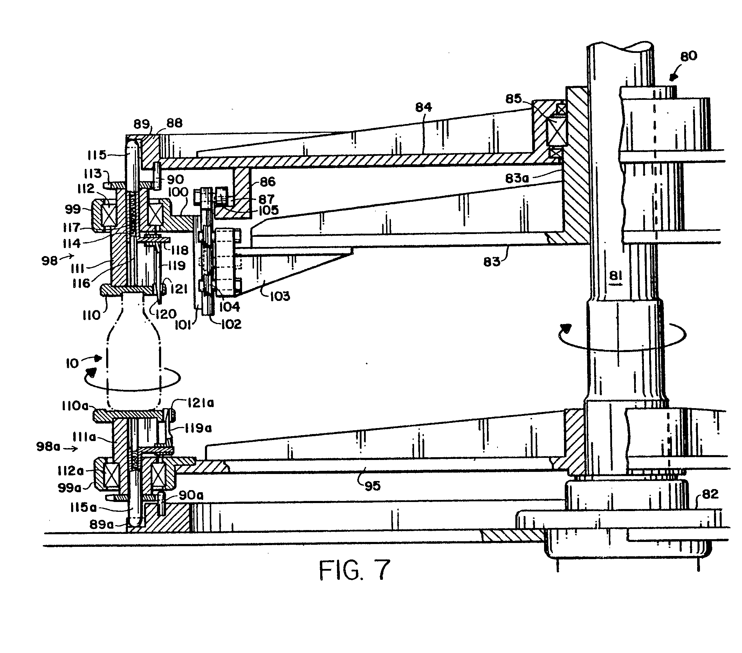

Also shown in Figure 1 are upper and lower arms or spokes 27 and 28, respectively, of a turret such as the turret shown in our US—A—4 108 710 whose function is to transport containers from a container supply through a label applying station and beyond so that labels applied and adhered to the containers by means of glue are wrapped around the containers. An upper chuck 25 and a lower chuck 26 are shown, the upper chuck 25 being rotatably mounted on the upper arm 27 by means of a shaft 29, and the lower chuck 26 being rotatably mounted on the lower arm 28 as by means of a shaft 30. Means are provided such as shown in Figure 2 of US—A—4 108 709 for lifting the upper chuck 25 and holding it in elevated position for entry of a container and for then lowering the chuck 25 to clamp the container between the upper and lower chucks. Further, the lower chuck 26 is positively driven by engagement of a collar 31 on the shaft 30 with a circular, compressible friction member 32 carried by an arcuate holder 33. It will be understood that other means of clamping and spinning containers during transit through the heat shrink station may be employed. A preferred design is described below with reference to Figures 7 to 9B.

Also shown in Figure 1 are two nozzles 40 and 41. The upper nozzle 40 has its tip 40A close to and pointed at the upper projecting portion 20 of the sleeve 16. The lower nozzle 41 has its tip 40A close to and pointed at the lower projecting portion 21 of the sleeve 16.

Referring now to Figure 2, three sets of upper and lower nozzles 40 and 41 are shown. For convenience, these sets appear to be located in a vertical plane, as they may be, but preferably they are located radially with respect to the axis of a turret. As will be seen, the tips of these nozzles are elongated such that, as a container 10 with a sleeve 16 adhered to it passes by and spins about its vertical axis, each portion (with an exception as described below) of the upper projecting portion 20 and of the lower projecting portion 21 is exposed to a current of hot air emanating from the nozzles.

The purpose of a plurality of sets of nozzles 40 and 41, e.g. three as in Figure 2, is as follows:

The film material 16 is a relatively limp material. If it is heated too long and too fast, it may deteriorate, undergoing slumping or other distortion of its configuration. Therefore, the heat is delivered in increments at heating stations A, B and C. A portion only of the heat required for shrinking is delivered at station A and the projecting portions 20 and 21 undergo a partial but incomplete shrinkage to, for example, the condition shown at station B. At station B a further increment of shrinkage occurs, and at station C the final shrinkage occurs. The projecting portions 20 and 21 are shrunk onto the container.

Depending upon the nature and thickness of the film, and possibly upon other factors, it may be possible to accomplish the heat shrinking in one step, in which case there would be one heat shrink station and one pair of nozzles 40 and 41. For higher speed application and/or with different types of film more than three pairs of nozzles may be provided.

Referring now to Figures 2 and 3, each nozzle 40 and 41 is provided with an obstruction 42 at a certain point. (Nozzle 40 is shown in Figures 3 and 4 but nozzle 41 is similar.) The obstruction 42 in the upper nozzle 40 is in vertical alignment with the obstruction 42 in the lower nozzle 41. As stated above, the containers are caused to spin by frictional engagement of the collar 31 with the rubber friction member 32. A seam 43 is shown in Figure 3, such being the place where the trailing end 44 of label 16 overlaps the leading end 45 of the label. The leading end is adhered by a layer of glue 46 to the container 10, and the trailing end 44 is adhered to the leading end 45 of the label by a layer of glue 47. Figure 3 portrays a point in the path of travel of the container and label where the seam 43 is juxtaposed to the nozzles 40 and 41. If hot air is applied too vigorously to this seam the glue will melt and cause smearing and will result in a defective or unsightly sleeve or label. The function of the plug 42 is to prevent or to moderate the flow of hot air at this point in the travel of the container. Since the container is spun at a predetermined rate and is caused to undergo orbital motion at a predetermined rate, the timing is such that when a container reaches a point opposite an obstruction 42, the seam 43 will be juxtaposed to the obstruction.

The drive roller which supplies the film, the cutter which severs the film into segments, the vacuum drum which picks up segments of film and transports them to the turret, the turret which transports containers and the means for spinning the chucks 25 and 26 are operated continuously by and are timed by well known means so that each segment of film is properly applied to the vacuum drum, glue is applied to film segment, the container picks up a film segment from the vacuum drum and travels and spins at a predetermined rate such that, among other things, the seam 43 of each film segment or label coincides with a plug or plugs 42.

Referring to Figure 4, this represents the situation after the seam 43 has passed by. As will be seen, the full current of hot air is applied to the film. The same condition, of course, prevails at all points both before and after the seam reaches the point shown in Figure 3.

Referring now to Figure 5, a complete labelling assembly is shown. It comprises a roll 50 of heat shrink film 51 (e.g. label stock), a drive roller 52 and a pinch roller 53, a cutter 54 and a vacuum drum 55. These elements are of known construction and mode of operation. Other elements not shown may be included, e.g. tensioning means for the label stock 51. A glue applicator 56 of known construction is also shown which applies hot melt glue to the leading end and the trailing end of each label.

The glue applicator 56 may be a rotating member which dips into a pot of hot melt glue (not shown) and it may be caused to oscillate as well as rotate in timed relation to the rotation of the vacuum drum 55 to apply a layer of glue 46 to the leading end of each label and a layer of glue 47 to the trailing end of each label. Alternatively the drum 55 may be formed with raised areas which are spaced so that the leading and trailing ends of the label are elevated from the main surface of the drum and are contacted by a glue applicator 56 which rotates but does not oscillate. Both types of glue applicator systems are well known.

Also shown is a turret 60 rotating about an axis 61 which receives containers 10 from a container feed (not shown). The turret 60 is provided with pairs of chucks such as those shown at 25 and 26 in Figure 1. Each container, in turn, is clamped between a pair of chucks and is transported orbitally about the axis 61 of turret 60 and is caused to spin about its own cylindrical axis. A glue line is applied to the leading and trailing ends of the label. It will be understood that the various driven elements are coordinated and synchronized to accomplish the desired results.

Each severed label 66 is gripped by vacuum drum 55 and is rotated counterclockwise as viewed in Figure 5 past the glue applicator 56 which applies glue to the leading and trailing end of each label. Preferably as described in U.S. Patent No. 3,765,991 the leading end of the label stock 51 is gripped by the vacuum drum 55 before a label is severed. Also the drum 55 is rotated at a surface speed greater than the speed at which the label stock is fed by the rollers 52 and 53. The label then proceeds to a labelling station D. The leading end of each label is adhered to the container at which time vacuum is released and the label commences to wrap around the spinning container until the glued trailing end overlaps and is adhered to the leading end of the label. If a partial wrap is to be applied, the glued trailing end will be adhered directly to the container. This wrapping is aided by an arcuate guard and pressure member 70 which is concentric to the container turret 60 and is spaced from the turret axis 61 so that it will restrain the loose end of the label until it is wrapped around the container. The guard 70 may be a brush or made of rubber or other material which does not mar the label. It need not extend above or below the cylindrical body portion of the container. Preferably the guard 70 is formed with a groove or channel (not shown) facing the label and the container which has a width equal to the width of the label. This design ensures that, regardless of irregularities in the containers or other disturbing factors, the leading and trailing ends 45 and 44 are not misaligned.

A pressure roller 71 is provided to apply pressure to the seam (which is shown in Figure 6) so that it is firm and even. This roller may be made of metal, plastic, rubber or other suitable material and it is rotated at a surface speed which is the same as or slightly slower than the surface speed of the container. The use of a slightly slower speed causes a pull or tension which is desirable.

A heating station such as that shown in Figures 1 to 4 is shown at 72 including a plug 73. Shrinking of the ends of the labels is accomplished as described above. The heating station 72 should be considered in the light of the description above with reference to Figures 1 to 4. That is, there will be a nozzle for the upper overlap 20 and a nozzle for the lower overlap 21 and there may be two or more sets of nozzles. The heating station 72 in Figure 5 is intended to embrace these variants. Labelled containers 10a are removed by a suitable container out-feed such as a star wheel (not shown).

There are several advantages to the apparatus and system described above, among which are the following: Instead of cutting a supply of heat shrink film into lengths which are greater than needed to wrap a container, forming each length into a tube which is oversize in relation to the container, fitting each tube over a container, then heat shrinking the entire tube onto the container, a continuous supply of label material which can be heat shrunk is provided; it is severed continuously into segments which are long enough only to surround a container with a small overlap; the segments are applied continuously to containers by a standard labelling procedure; and then heat is applied to the projecting portion or portions at one or both ends of the label to heat shrink only the overlapping material. (To distinguish from the leading and trailing ends 45 and 44 (see Figure 3) the "ends" as referred to above, i.e. the projecting portions such as shown at 20 and 21, will be referred to hereinafter as "edges".) Besides greater operating efficiency and more economical apparatus, the system described above saves material because oversize tubes are not required and it saves thermal energy because only the edge or edges (a small fraction of the label) need be heat shrunk.

In the preferred embodiment of the invention, which is illustrated in Figures 7 to 10, provision is made to facilitate the formation of a good seam at the edge portions 20 and 21 (see Figure 1). As shown in Figure 1 and as described above, the edge portions 20 and 21 stand free and they are caused to shrink onto the curved portions 14 and 15, respectively, of the container. In forming the seam shown in Figure 3, which is designated by the reference numeral 43, pressure is applied at the labelling station D (see Figure 5) by the label drum 55 and the container 10 and beyond this station by the member 71 and the container 10. This pressure aids in forming a tight seam. Such pressure is absent, however, at the edges 20 and 21 because the container slopes away from the label and the label stands free.

In Figures 7 to 10 a method and apparatus are illustrated which provide pressure at the edges of the label.

Referring now to Figure 7 a turret assembly 80 is shown as a specific and preferred embodiment of the turret assembly 60 shown in Figure 5.

A main shaft 81 is shown which is journalled in a frame 82 and mounted to rotate with it are a number of arms or spokes 83 which are integral with a hub 83a which is fixed to the shaft 81 to rotate with it. Rotatably mounted on the hub 83a is a plate 84 which is mounted on hub 83a by means of bearings 85. The plate 84 is fixed by suitable means (not shown) against rotation so that the shaft 81 and parts operated by it may rotate about the axis of the shaft 81 while the plate 84 and parts supported by it are stationary.

The plate 84 supports a bracket 86 which in turn support an arcuate continuous cam 87. At its outer edge the plate 84 is formed with a bracket 88, which supports a continuous arcuate cam 89. The plate 84 also supports pins 90 which form a gear to drive sprockets as described hereinafter. Lower arms 95 are provided which are fixed to and rotate with the shaft 81 and support a cam 89a and pins 90a which are comparable to and serve a similar purpose as the cam 89 and pins 90.

A chuck assembly is provided which includes a collar 99 which is connected by a bracket 100 to a bar 101 which in turn supports a rail 102 of angular cross-section. A bracket 103 connected to the spoke 83 supports rollers 104 which have grooved peripheries which ride upon the rail 102. At its upper end the rail 102 supports a cam follower roller 105 which rides on the cam 87. A chuck 110 is provided which is shaped so that it will fit snugly over the crown of a container 10. This chuck is carried by a hub 111 which forms the inner race for roller bearings 112, the outer race of which is provided by the collar 99. Attached to the upper end of the hub 111 is a sprocket 113 which meshes with the pins 90 and serves to rotate the chuck 110. The hub 111 is hollow, being formed with an axial passage 114 in which a pin 115 having a rounded upper end is slidable. The rounded upper end of the pin 115 bears against the cam 89. A pin 116 extends upwardly from the chuck 110 and a spring 117 lodged within the tubular passage 114 and seated on the pin 116 serves to hold the rounded upper end of the pin 115 at all times against the cam 89.

A bracket 118 is provided which is fixed to the pin 115 and which supports a tongue 119 which extends downwardly and has a tapered tip 120. The tongue passes through an opening 121 in the chuck 110. The taper of the tip 120 conforms to the surface of the container at the junction of the shoulder with the cylindrical body of the container.

A chuck assembly 98a is provided at the bottom and is supported by the plate 95. Parts similar to parts in the chuck assembly 98 are similarly numbered with the addition of the letter "a". The construction and operation will be evident from the description above of the chuck assembly 98 except that there is no cam 87, cam follower 105 and associated parts, the reason being that the lower chuck assembly 98a is not elevated and lowered as is the upper chuck assembly 98.

It will be understood that each pair of arms or spokes 83 and 95 is provided with chuck assemblies 98 and 98a and that as many pairs of arms and chuck assemblies are provided as desired.

As the shaft 81 rotates each of the chuck assemblies 98 and 98a will rotate orbitally with the shaft 81 about the axis thereof. As more fully described hereinafter the upper chuck assembly 98 and with it the chuck 110 are caused periodically to elevate by reason of the cam 87 and the cam follower roller 105 and the supporting mechanism described above and illustrated in Figure 7 and that meanwhile the chuck 110 will be caused to rotate about its own axis by reason of the sprocket 113 and pins 90. Also the tongue 119 will undergo periodic elevation (retraction) and lowering (extension) by reason of engagement of the pin 115 with the cam 89. The lower chuck assembly 98a will rotate orbitally with the shaft 81; the lower chuck 110a will rotate about its own axis; and the tongue 119a will undergo periodic elevation (extension) and lowering (retraction).

Referring to Figure 5 as well as to Figure 7, the profile of the cam 87 is such that each upper chuck 110 is in elevated position at the station marked B in Figure 5 where a container enters the turret so as to clear the crown of the container. The container is seated on the lower chuck 110a. Then the cam 87 and the cam roller 105 will cause the bar 101 and bracket 100 to lower thereby contacting the respective chuck 110 with the crown of the container and clamping the container between the upper and lower chucks and causing the container to spin. This driving relationship between the chucks 110 and 110a and the container 10 will continue through the stations indicated as C, D, E and F in Figure 5 and then the upper chuck 110 will be elevated to free the container which will be extracted by suitable extraction mechanism (not shown) such as, for example, a star wheel.

Adjustments for containers of different heights and different shapes can be readily made. For example hub 83a may be raised or lowered and chucks 110 and 110a may be changed.

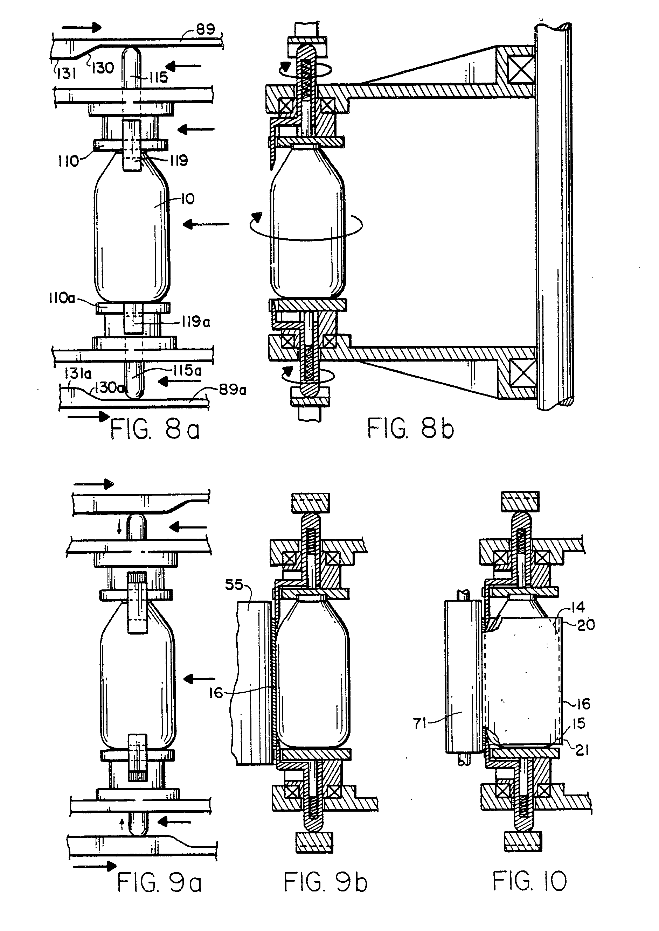

Referring now to Figures 8A through 9B, these show diagrammatically (and with certain parts shown in Figure 7 omitted for clarity) the sequence of operations with respect to the tongues 119 and 119a.

Referring now to Figures 8A and 8B the tongues 119 and 119a are shown in their retracted positions as they would be, for example, between stations B and C in Figure 5. At an appropriate time before the container reaches the labelling station D the tongues will be caused to extend in the following manner: The upper pin 115 which moves the upper tongue 119 travels along the cam 89 and when it reaches the rise portion 130 of the cam it descends and then remains in its lowered position by reason of the dwell 131 of the cam 89. Similarly the lower pin 115a and the lower tongue 119a will be caused to move upwardly by the rise 130a and will be held in elevated position by the dwell portion 131a of cam 89a. The positions of the tongues 119 and 119a in their extended state is shown in Figures 9A and 9B. Preferably these tongues are extended before the container reaches the labelling station D and they are in the proper position shown in Figure 10 to cooperate with the roller 71 at station E to apply pressure to form a good seam at the overlap portions of the label. The ends of the dwell portions of the cams 89 and 89a (not shown) will, of course, operate to retract the pins 115 and 115a and with them the tongues 119 and 119a. This will occur in advance of the hot air applicator 72 at station F so that the overlap seams will shrink upon the container as described hereinabove.

The pressure of tongues 119 and 119a need be provided only at station E where the trailing end 44 is adhesively applied to the leading end 45 by a glue line 47 (see Figures 3 and 6). The glue line 46 which adhesively attaches the leading end of the label to the container will not be applied at the edges 20 and 21 of the label (see Figure 1). The timing is such that the seam 43 and the tongues 119 and 119a coincide at the tangent position of the roller 71 and the container 10, at which time the counteracting pressures of the tongue or tongues and the container are provided to form the seam 43 along the height of the label including the free standing end edge portions 20 and 21.

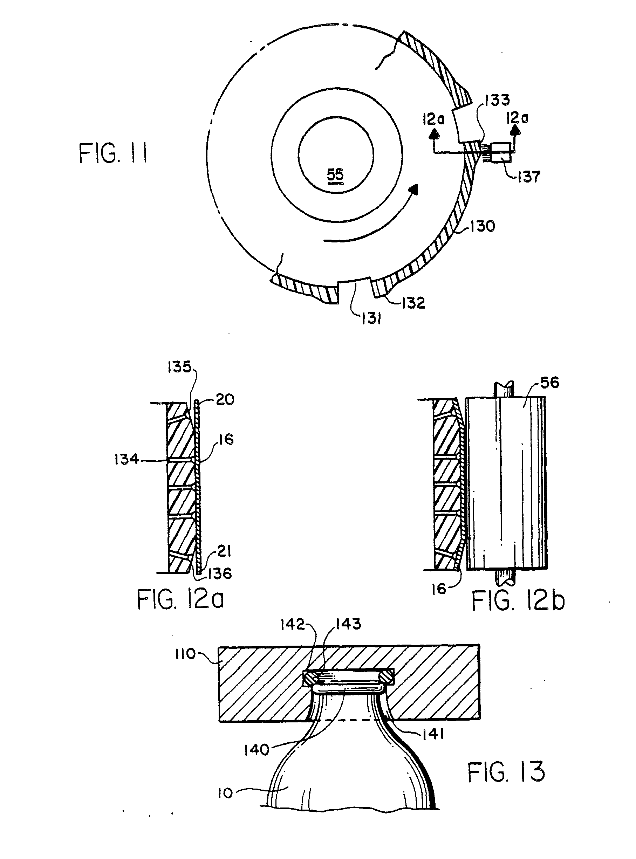

To prevent fouling of the tongues 119 and 119a, different approaches may be used. For example if glue is applied to the container as in U.S. Patent No. 4,108,710 it may be applied only to the cylindrical body of the container. No glue will be applied to the leading end of the label. Glue will be applied to the entire trailing end of the label but will not contact the tongues 119 and 119a. If, as in Figure 5, glue is applied to the leading end as well as to the trailing end of the label the raised pad (not shown in Figure 5 but shown in Figures 11, 12A and 12B) for the leading end of the label may extend only along the cylindrical body of the container so that a glue line 46 is applied only to that part of the label.

Another approach to the problem is that shown in Figures 11, 12A and 12B. Referring to Figure 11, the vacuum drum is shown with one of the pads 130 used to pick up and carry the labels from the label receiving station to the label applying station D (see Figure 5). There may be as many of these pads as desired and they are made of a resilient material such as rubber. Between each pad and the next pad is a recessed area 131 which extends axially along the surface of the drum and each pad is formed at its trailing end with a raised portion 132 and at its leading end with a raised portion 133 which serve to elevate the trailing and leading end of the label into engagement with the glue applicator 56. As will be seen in Figure 12A and 12B, the raised portion 133 is formed with suction passages 134. (The remainder of the pad including the trailing end portion 132 are also provided with suction passages (not shown)). The manner in which suction is applied through the suction passages to pick up a label at the label receiving station and to release it at the label applying station D are well known and require no description here.

As will be seen, the top and bottom parts of the raised portion 133 are tapered at 135 and 136 so that when a label 16 is applied, the top and bottom edges 20 and 21 (see Figure 1) of the label will overlie the tapered portions 135 and 136. Brushes 137 are provided (one of which is shown) which push gently against the edges 20 and 21 of the label. Other means than brushes may be used for this purpose which do not mar the label material. The edges 20 and 21 are pushed against the tapered portions 135 and 136 and are held against them as shown in Figure 12B by suction. Therefore glue will be applied only at the midportion of the leading end of the label by the glue applicator 56 which is in contact with the cylindrical body of the container. This is sufficient to tack the label onto the container and it avoids fouling of the tongues 119 and 119a. The brushing back of the edges 20 and 21 of the label is carried out before the label reaches the glue applicator 56.

Referring now to Figure 13, a preferred form of upper chuck 110 is provided which is suited to grip the crown 140 of a container 10 such as a bottle. The chuck 110 is formed with a circular opening 141 which tapers upwardly as shown and which opens into a larger area 142 at the top to receive an O-ring 143.

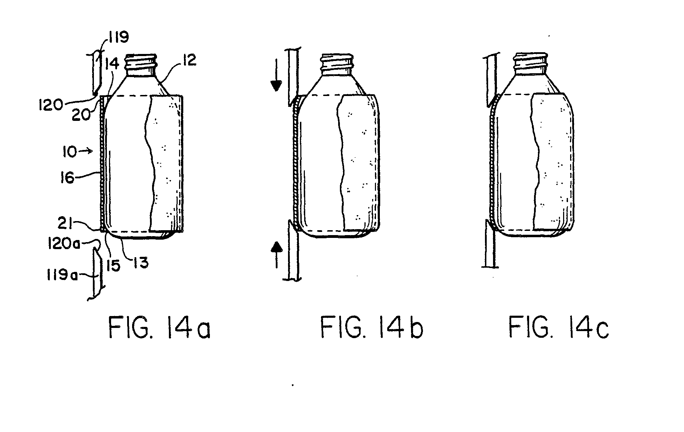

Referring now to Figures 14A, 14B and 14C, an improvement upon the placement and functions of the tongues 119 and 119a is shown. Omitted from Figures 14A, 14B and 14C are parts such as, for example, the chucks 110 and 110a, the cams 89 and 89a and the hot air nozzles 40 and 41. It is to be understood that all of the operating mechanism described above with reference to Figures 1 to 13 is present except for the placement of the tongues 119 and 119a and the absence (as explained below) of the obstructions 42.

In Figure 14A, a container 10 is shown with a heat shrink (but unshrunken) film 16 applied thereto with projecting end edge portions 20 and 21. Each tongue 119 and 119a has a bevelled portion 120 or 120A, respectively, like the tongues 119 and 119a shown in Figures 8A to 10. However each tongue 119, 119a is displaced radially outwardly with respect to the container so that the tips are outside the upper and lower projections of the cylinder formed by the sleeve 16. Figure 14B shows a later stage in operation at the point where hot air (unimpeded by obstructions 42) commences to be applied. Figure 14C shows the position of the tongues during the major part (or all) of the heat shrinking process while hot air is being applied and for a short time afterwards.

The tongues 119 and 119a serve as heat barriers to prevent excessive heat being applied to the seams where the leading and trailing ends of the film or label overlap. This seam is shown at 43 in Figure 6 and although it is not shown in Figures 14A, 14B and 14C it will be understood that it is present opposite the tongues 119 and 119a. It has been found that the application of heat in this manner and the pressure exerted by the tongues against the end portions 20 and 21 accomplish a superior shrinking of the end portions of the seams onto the container. Also the tongues 119 and 119a have a mechanical function in that they urge the seam or overlap portion of the film 16 inwardly against the container as shown in Figures 14B and 14C. The term "overlap" in this context means the area where the trailing end of the film overlaps the leading end. It will be understood that the tongues 119 and 119a are juxtaposed to this overlap by reason of the design of the machine. Referring to Figures 5 and 7, the chucks 110 and 110A are positively driven by the gears 90, 113 and 90a, 113a (see Figure 7); and the design is such that when a container reaches station D and the leading end of a film segment is applied to a container, the tongues 119 and 119a are in alignment with the leading end, therefore are in alignment with the seam or overlap at stations E and F (see Figure 5).

At the conclusion of this operation, the tongues, chucks, etc., are, of course, returned to their starting positions.

The embodiment shown in Figures 14A, 14B and 14C has been found preferable where the film material, e.g. foam, has heat shrinking characteristics such that the trailing end 44 tends to part from the leading end 45 with the result that an unsightly or esthetically displeasing margin or margins are formed. We have found that by shielding the edge portions at the seam 43 and by pressing the edge portions against the container shoulder and bottom curved portions by means of the tapered tips 120 and 120a will accomplish a neater shrinking of the upper and lower edges of the film onto the container.

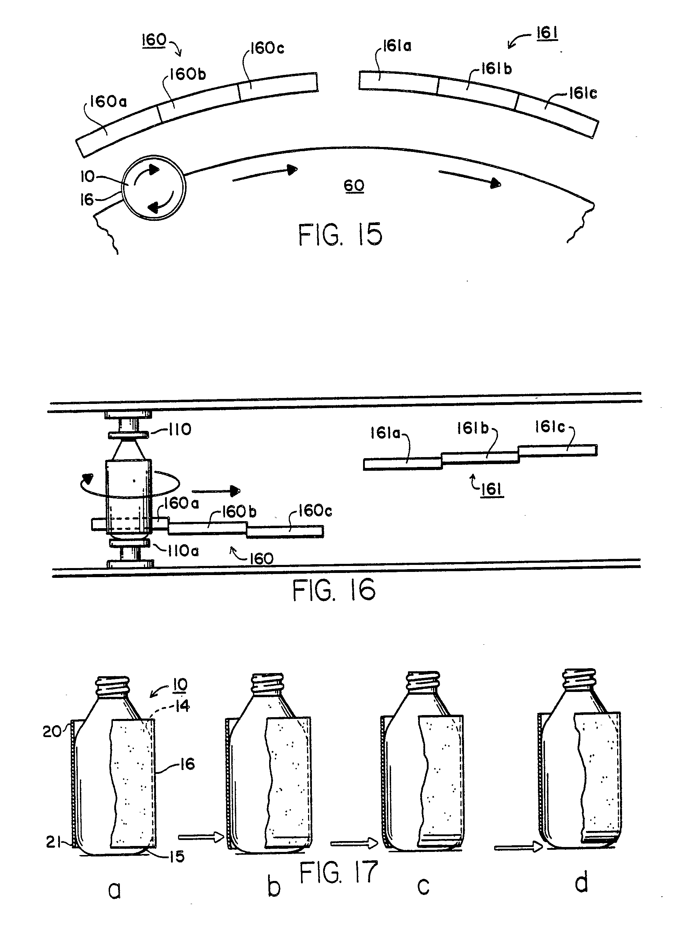

Referring now to Figures 15, 16 and 17, a preferred embodiment at the heat shrinking station F is illustrated. A portion of turret 60 is shown and a container 10 with a label 16 applied thereto is also shown. Omitted from Figure 15 but shown diagrammatically in Figure 16 are the chucks 110 and 110a and other associated equipment which is shown in Figure 7.

Heater assemblies 160 and 161 are provided for shrinking the lower edge 21 and the upper edge 20, respectively. The assembly 160 comprises three heaters 160a, 160b and 160c which, as shown in Figure 16, are arranged at different elevations, the heater 160a being at the highest elevation, the heater 160b somewhat lower and the heater 160c being at the lowest elevation. Heater assembly 161 similarly comprises three

heaters 161a, 161b and 161c which are arranged at different elevations as shown. The heaters are preferably of the blower type in which a current of air created by release of compressed air is heated by an electric heating element. The speed of the air may be controlled by a valve and the degree of heat may be controlled by a rheostat.

Referring to Figure 17, containers are shown at four different positions in their travel past heater assembly 160. The container at the left is shown approaching the heater assembly; the next container is shown opposite heater 160a; and the last container is shown opposite heater 160c. The heater 160a directs heat against the film 16 at a level just above the edge 21, that is to say at approximately the junction of the edge and the main body portion of the film. The heater 160b directs heat against the upper portion of the edge 21 and the heater 160c directs heat against the lower portion of the edge 21. The arrows indicate the direction of flow of hot air from the heaters 160a, 160b and 160c. Meanwhile the container will be spinning and will have spun at least one revolution while passing each of the heaters 160a, 160b and 160c. The effect of this procedure is as shown in Figure 17. That is, the heat shrinking of each lower edge 21 starts at the top and proceeds downwardly with the result that air is squeezed out and a tight, bubble free bond is effected between the film and the rounded lower portion 15 of the container.

A similar procedure occurs at the upper edge 20 as the container passes the heaters 161a, 161b and 161c. That is to say, the edge 20 will be shrunk by heater 160a at approximately the junction of the edge 21 and the main body portion of the film, then shrinking will occur upwardly of this level and finally the extreme edge of the edge portion 21 will be shrunk onto the rounded portion 14 of the container thereby accomplishing the same effect as described above with reference to the heaters 160a, 160b and 160c.

The tongues 119 and 119a are not shown in Figures 15, 16 and 17 but they are preferably employed as in Figures 14a, 14b and 14c.

The heater assemblies 160 and 161 are shown in sequence with the assembly 160 preceding the assembly 161. This order may be reversed and the assembly 160 and 161 may be in vertical alignment. However, a spacing between them is preferred as shown because it has a lesser tendency to overheat the film and the containers, and in particular the glue line applied at the seam of the film. That is, by the time a container and film reach heater assembly 161 much of the heat applied by the preceding heater assembly 160 will have been dissipated.

The seam at the freestanding edge (or edges) of the film may have glue applied to it but such is unnecessary.

Another advantage of the present apparatus is that the input of heat can be regulated for best results. Where, as in the embodiment described above, heat is applied by means of hot air the rate of energy input can be controlled by controlling the speed of the air and the temperature of the electric heater. The optimum rate of heat or energy input will depend upon a number of factors such as the size and material of the containers, the characteristics of the heat shrink film and the characteristics of the hot melt glue. These factors will remain constant or nearly constant for a considerable period of time. However, a variable factor is the speed of the machine which depends upon a number of conditions such as the supply of containers, the demand for labelled containers, difficulties in other parts of the production line, etc.

In the system described above with reference to U.S. Patent 3,822,459 it is difficult to adjust the energy input. The present invention enables rapid and, where needed, frequent adjustment of energy input by adjustment of the temperature of the electric heater and by adjustment of the rate of release of compressed air. Further, these adjustments can be synchronized with the speed of the machine. Thus the speed of the drive shaft 81 (see Figure 7) can be synchronized with the speed of the air and the temperature of the electric heaters. If for some reason it is necessary to slow down the operation of the machine, it is also advantageous to slow down the rate of input of heat because overheating may have an adverse effect upon the film and more particularly upon the glue at the overlapping seam. If for some reason the speed of the machine is reduced the speed of the air and/or the temperature of the electric heaters can be diminished rapidly and instantly. Similarly if it is desired to speed up the machine then it will be necessary to increase the rate of heat input because each container's transit past the heaters will be of shorter duration. This increase of rate of heat input can be readily and instantly carried out. As noted above, this can be coordinated with the speed of the drive shaft 81.

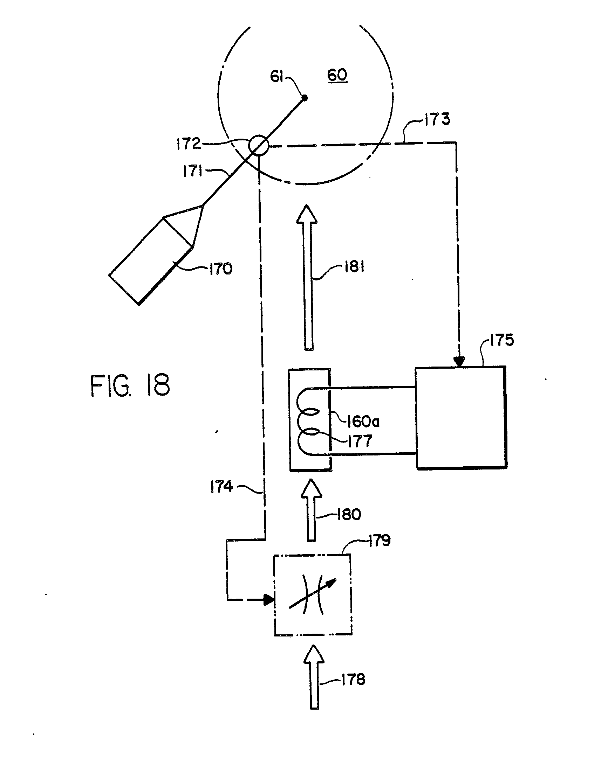

Referring now to Figure 18 a control system for the heater assemblies 160 and 161 is shown. A main motor and speed reducer 170 drives, through a connection indicated at 171, the shaft 61 of turret 60. A microprocessor or other suitable control device 172 senses the speed of the shaft 61 and through suitable connections 173 and 174 controls temperature controller 175 and air flow controller 179, respectively. A heater assembly 160a is shown which has an electric resistance element 177 which is controlled by controller 175. Compressed air from a suitable source (not shown) enters through line 178 into air flow controller 179 which is variable and reduces the pressure, hence the velocity, of air passing through line 180 to heater 160a. Heated air passes through nozzle 181 and is applied to the edge 21. Only one heater 160a is shown but it will be understood that the control system shown may be used to control heaters 160a, b and c and 161a, b and c or that a separate control system may be used for each heater, or for any selected group of heaters.

## Claims

1. A method of applying heat shrinkable film to an article (10) having a main, vertical body portion (11) and at least one end portion (14, 15) which curves inwardly from the main portion, said method comprising tightly applying the film (16) to the body portion of the article without heat shrinking and with a small projection (20, 21) of the film being allowed over at least one such end portion and then applying heat to the film so that the projecting film is heat-shrunk onto the article, characterised in that prior to the application of heat the film is adhered to the body portion by narrow regions (46, 47) of adhesion solely at the leading and trailing edges of the film wrapped about the body portion of the article.

2. A method according to claim 1, characterised in that the container has two inwardly curving opposite end portions (14, 15) and both the top and the bottom portions (20, 21) of the film are heat shrunk onto the container.

3. A method according to either preceding claim, characterised in that heat is applied to the projecting film substantially without being applied to the main body of film, the film being unshrunk film when applied to the body portion.

4. A method according to any preceding claim, characterised in that said heat shrinking is caused by applying hot air to the projecting film as the article is spun about the vertical axis of said body portion.

5. A method according to claim 4, characterised in that the hot air comes from an elongated nozzle (40, 41) and the article (10) is caused to move, while spinning, along the length of the nozzle.

6. A method according to any preceding claim, characterised in that a continuous supply of the film is severed continually into segments of a predetermined length, and the severed segments are transported in sequence to a film applicator station where they are applied to individual ones of a series of articles fed thereto.

7. A method according to any preceding claim, characterised in that the heat applied to heat shrink the or each overlap is applied in separate stages to cause partial heat shrinking in the first stage and further heat shrinking in each following stage.

8. A method according to any preceding claim, characterised in that the articles are containers that are cylindrical and are transported continuously in a circular path from a container input station to a container output station, the containers being caused to spin about their longitudinal axes during such transport, and the leading end of each segment of film being applied by means of an adhesive to each container at a label applying station located in said circular path and being wrapped around the container by reason of the spinning motion of the container.

9. A method according to claim 8, characterised in that the trailing edge (44) of each segment of film is caused to overlap the leading edge (45) on the container (10) and is adhered thereto thereby forming a seam.

10. A method according to claim 9, characterised in that the application of heat is interrupted or diminished whenever a seam is juxtaposed to the source of heat.

11. A method according to claim 9 or 10, characterised in that each article and its intended segment are transported along separate paths to a position where the leading end of the segment is tangent to the cylindrical body of the article; pressure is applied at such tangent position between the segment transport and the article sufficient adhesively to secure the leading end of the segment to the cylindrical body of the article; the article is spun with the segment so attached to wrap the segment about the article to form an adhesive seam between the trailing and leading ends of the segment, thereby forming an article with a segment wrapped tightly about and adhesively secured to its body with a free standing edge or edges projecting beyond the body; and a tongue or tongues (119, 119a) is or are interposed between the free standing edge or edges (20, 21) of the segment (16) and the sloping end portion or portions (14, 15) of the article to provide a continuation of said body portion to assist in seam formation.

12. A method according to claim 11, characterised in that the segment is transported by a rotary vacuum drum (55), the article is transported by a rotary article transport (60), the two transports bring the leading end of each segment into tangent contact with an article, and the article transport, after attachment of the leading end, spins the article to wrap the segment around it.

13. A method according to any one of claims 1 to 10, characterised in that the trailing end (44) of the film (16) is lapped over and adhered to the leading end (45) of the film to form a side seam and in that during heat shrinking of the or each projecting portion of the film onto the article a tongue (119, 119a) is interposed between the source of heat and the side seam, such tongue serving to moderate the application of heat to the side seam.

14. A method according to claim 13, characterised in that the trailing end of the film is adhered to the leading end by an adhesive.

15. A method according to claim 13 or 14, characterised in that the article has two inwardly curving end portions with respective tongues being interposed between the sources of heat and both ends of the film.

16. A method according to claim 13, 14 or 15, characterised in that the or each tongue is also used to urge the or each projecting portion against the container.

17. A method according to any preceding claim, characterised in that the or each projecting portion is heat shrunk onto the article by application of heat in a manner to shrink the projecting portion progressively from its junction with the main body portion to the outer edge of the projecting portion whereby a substantially bubble free bond is obtained between the shrunken projecting portion and the article.

18. A method according to claim 17, characterised in that such articles are caused to move first through a wrapping zone where film is applied around the article and then through a zone wherein a current of hot air is applied and the velocity and/or temperature of the hot air is coordinated with the rate of movement of the articles.

19. Apparatus for applying heat shrink film to articles (10) having a main body portion (11) and at least one end portion (14, 15) adjoining and extending inwardly from the body portion, said apparatus comprising means (55) for wrapping such film as a sheet in unshrunk condition onto and securing it to the main body portion (11) of the articles (10) with a projecting portion (20, 21) extending over at least one such end portion (14, 15), means (60) for moving each article so wrapped through a heating station to shrink the projecting portion onto the or each end portion of the article, characterised in that means are provided for applying adhesive solely in narrow regions of the leading and trailing edges (45, 44) of the sheet (16) of film for securing the film to the article and in that the heating station includes means (72) for applying heat in a localised manner to the or each projecting portion whereby each segment of film is adhered to the body portion of each article without heat shrinking the same.

20. Apparatus according to claim 19, characterised in that the wrapping means comprises a film feed for continuous supply of film material (51) from a roll (50) thereof, a continuous cutting assembly (54) acting to sever segments of film from such supply, a continuously rotatable vacuum drum (55) serving to grip the leading end of each severed segment of film, to adhere the segment to the surface of the drum, to transport the segment to an applicator station and to release the segment at such station, and a continuous container transport (60) serving to transport articles continuously to said applicator station and then to the heating station.

21. Apparatus according to claim 20, characterised in that the wrapping means comprises an article transport (60) adapted to transport such articles in sequence to an applicator station with the body of each article accessible, a segment transport (55) adapted to transport segments of film in sequence to said applicator station with the leading end of each segment tangent to the body of a respective article, means for adhesively securing such leading end to the body of the respective article by compressing the leading end between the container and the segment transporter, means (25) for spinning the article (10) about its cylindrical axis, means (70) serving during such spinning to wrap the segment about the body, and means (71) tangent to the body of the article (10) for the application of pressure to the overlapping ends of the segment adhesively to secure the trailing end to the leading end of the segment.

22. Apparatus according to claim 21, characterised in that extensible-retractable means (119, 119a) are insertable when extended between the free standing edge or edges of the segment and the end portion or portions of the article to act, when in extended inserted position, to provide a continuation of the body portion of the article and to cooperate with said tangent means (71) to apply pressure and form a seam at the overlap of the leading and trailing ends of the segment, and in that means are provided for cyclically operating such extensible-retractable means to extend it into the space between the free standing edge or edges of the segment and the sloping end portion or portions of the container during seam formation and thereafter retracting such means.

23. Apparatus according to claim 21 or 22, characterised in that said article transport is in the form of a rotary member (60) rotating about a fixed axis (61) and which includes a plurality of opposing pairs of rotary chucks (110, 110a) for gripping opposite ends of the articles (10) and spinning the same about their cylindrical axes as they move orbitally around said fixed axis.

24. Apparatus according to claim 23, characterised in that said segment transport is in the form of a rotary vacuum drum (55) serving to pick up segments on its surface at a segment pickup station, to hold each segment on its surface during rotation, to apply pressure against the leading end of the segment at said applicator station and to release the segment to the container at said station.

25. Apparatus according to claim 20, characterised in that means (115, 89; 115a, 89a) are provided for interposing a tongue (119, 119a) between the source of heat and the seam portion or portions of the overlap or overlaps during at least a portion of the heat shrinking step, said tongue serving to moderate application of heat to the seam portion or portions thereof.

26. Apparatus according to claim 25, characterised in that said tongue (119, 119a) is arranged also to urge the overlap against the container.

27. Apparatus according to claim 26, characterised in that said heat shield tongue has a tapered end portion (120, 120a) to apply pressure to the edge portion or portions as it is extended thereby urging such edge portion or portions toward the end portion or portions of the article.

28. Apparatus according to claim 19, characterised in that the means (160a, 160b, 160c; 161a, 161b, 161c) for applying heat is such as to apply heat in a manner progressively to shrink the or each projecting portion of the film onto the article commencing at the junction thereof with the body portion of the article to the edge of the projecting portion.

29. An article (10) having a main body portion (11) having a vertical surface and at least one end portion (14, 15) adjoining the main body portion and curving inwardly therefrom, heat shrinkable film being adhered to the main body portion and projecting over said curved end portion, the projecting portion of the film being heat shrunk into close engagement with said curved portion, characterised in that at least the majority of the film encompassing said cylindrical body is relatively unshrunk, and that the only adhesion by means of an adhesive of the film to the container is provided at a narrow band (46) at the leading edge of the film.

30. An article according to claim 29, characterised in that there is no adhesion between the projecting portion of the film and the curved end portion of the article.

31. An article according to claim 29 or 30, characterised in that the trailing edge of the film overlapping the leading edge of the film is secured to the leading edge by a narrow region (47) of adhesive material.

32. An article according to any one of claims 29 to 32, characterised in that the adhesive material is hot melt glue.

**Patentansprüche**

1. Verfahren zum Aufbringen von wärmeschrumpfbarer Folie auf einen Gegenstand (10) mit einem vertikalen, bauchigen Hauptteil (11) und mindestens einem Endteil (14, 15), der gegenüber dem Hauptteil einwärts gekrümmt ist, wozu die Folie (16) ohne Wärmeschrumpfen fest auf den bauchigen Teil des Gegenstands aufgebracht wird und ein kleiner Fortsatz (20, 21) der Folie über mindestens einen dieser Endteile vorstehen kann, und wozu anschließend der Folie Wärme zugeführt wird, so daß die vorstehende Folie durch die Wärme auf den Gegenstand geschrumpft wird, dadurch gekennzeichnet, daß die Folie vor der Zuführung von Wärme an dem bauchigen Teil nur mit schmalen Klebezonen (46, 47), die an dem vorderen und dem hinteren Rande der um den bauchigen Teil des Gegenstands gewickelten Folie vorgesehen sind, angeklebt wird.

2. Verfahren nach Anspruch 1, dadurch gekennzeichnet, daß der Behälter zwei einwärts gekrümmte entgegengesetzte Endteile (14, 15) besitzt und sowohl der obere wie der untere Teil (20, 21) der Folie auf den Behälter wärmegeschrumpft werden.

3. Verfahren nach einem der beiden vorhergehenden Ansprüche, dadurch gekennzeichnet, daß der vorstehenden Folie Wärme so zugeführt wird, daß sie praktisch nicht auf den Hauptteil der Folie trifft, und daß die Folie als nicht geschrumpfte Folie auf den bauchigen Teil aufgebracht wird.

4. Verfahren nach einem der vorhergehenden Ansprüche, dadurch gekennzeichnet, daß das genannte Wärmeschrumpfen durch Zuführen von Heißluft auf die vorstehende Folie herbeigeführt wird, wenn der Gegenstand um die Vertikalachse des genannten bauchigen Teils gedreht wird.

5. Verfahren nach Anspruch 4, dadurch gekennzeichnet, daß die Heißluft aus einer länglichen Düse (40, 41) geblasen wird und der Gegenstand (10) während des Drehens zu einer Bewegung längs der Düse veranlaßt wird.

6. Verfahren nach einem der vorhergehenden Ansprüche, dadurch gekennzeichnet, daß von einer ununterbrochenen Zuführung der Folie fortlaufend Abschnitte vorbestimmter Länge abgetrennt werden, und daß die abgetrennten Abschnitte nacheinander in eine Folienauflegestation geführt werden, in der sie auf jeweils einen einer Folge von in die Station eingeführten Gegenständen aufgebracht werden.

7. Verfahren nach einem der vorhergehenden Ansprüche, dadurch gekennzeichnet, daß die zum Wärmeschrumpfen des vorstehenden Teils oder der vorstehenden Teile zugeführte Wärme in getrennten Schritten zugeführt wird, um eine Teilschrumpfung im ersten Schritt und weiteres Wärmeschrumpfen in jedem folgenden Schritt herbeizuführen.

8. Verfahren nach einem der vorhergehenden Ansprüche, dadurch gekennzeichnet, daß es sich bei den Gegenständen um zylindrische Behälter handelt, die fortlaufend auf einer Kreisbahn von einer Behältereingabestation zu einer Behälterausgabestation transportiert werden, daß die Behälter während dieses Transports zu einer Drehung um ihre Längsachse veranlaßt werden, und daß das vordere Ende jedes Folienabschnitts mit Hilfe eines Klebers an einer in der genannten Kreisbahn angeordneten Etikettauflegestation auf jeden einzelnen Behälter aufgebracht und infolge der Drehbewegung des Behälters um den Behälter herumgewickelt wird.

9. Verfahren nach Anspruch 8, dadurch gekennzeichnet, daß auf dem Behälter (10) der hintere Rand (44) jedes Folienabschnitts zur Überlappung auf den vorderen Rand (45) des Folienabschnitts gebracht und auf dem vorderen Rande unter Bildung einer Naht festgeklebt wird.

10. Verfahren nach Anspruch 9, dadurch gekennzeichnet, daß die Wärmezufuhr immer dann unterbrochen oder vermindert wird, wenn eine Naht der Wärmequelle gegenüberliegt.

11. Verfahren nach Anspruch 9 oder 10, dadurch gekennzeichnet, daß jeder Gegenstand und sein für ihn bestimmter Abschnitt auf getrennten Bahnen in eine Stellung gebracht werden, in der das vordere Ende des Abschnitts tangential zu dem zylindrischen Bauch des Gegenstands verläuft, daß in dieser Tangentialstellung zwischen der Einrichtung zum Transportieren des Abschnitts und dem Gegenstand ausreichender Haftungsdruck ausgeübt wird, um das vordere Ende des Abschnitts an dem zylindrischen Bauch des Gegenstands zu befestigen, daß der Gegenstand mit dem auf diese Weise angebrachten Abschnitt gedreht wird, damit der Abschnitt um den Gegenstand herumgewickelt wird, um eine Klebenaht zwischen dem vorderen und dem hinteren Ende des Abschnitts herzustellen, wodurch ein Gegenstand gebildet wird, um den ein Abschnitt engsitzend herumgewickelt und an seinem Bauch befestigt ist, wobei ein freistehender Rand oder freistehende Ränder über den Bauch hinausragen, und daß eine Zunge oder mehrere Zungen (119, 119a) zwischen den freistehenden Rand oder die freistehenden Ränder (20, 21) des Abschnitts (16) und den schrägstehenden Abschnitt oder die schrägstehenden Abschnitte (14, 15) des Gegenstands gebracht wird oder gebracht werden, um zur Verbesserung der Nahtbildung eine Fortsetzung des genannten bauchigen Teils vorzusehen.

12. Verfahren nach Anspruch 11, dadurch gekennzeichnet, daß der Abschnitt von einer umlaufenden Vakuumtrommel (55) transportiert wird, daß der Gegenstand von einer umlaufenden Einrichtung (60) zum Transportieren des Gegenstands transportiert wird, daß die beiden Transporteinrichtungen das vordere Ende jedes Abschnitts zur Tangentialberührung mit einem Gegenstand bringen, und daß die Einrichtung zum Transportieren des Gegenstands diesen nach dem Befestigen des vorderen Endes dreht, um den Abschnitt um den Gegenstand herumzuwickeln.

13. Verfahren nach einem der Ansprüche 1 bis 10, dadurch gekennzeichnet, daß das hintere Ende (44) der Folie (16) auf das vordere Ende (45) der Folie gelegt und zur Bildung einer Seitennaht geklebt wird, und daß während der Warmschrumpfens des vorstehenden Teils oder der vorstehenden Teile der Folie auf den Gegenstand eine Zunge (119, 119a) zwischen die Wärmequelle und die Seitennaht gebracht wird, welche Zunge zur Herabsetzung des Wärmeeinflusses auf die Seitennaht dient.

14. Verfahren nach Anspruch 13, dadurch gekennzeichnet, daß das hintere Ende der Folie mittels eines Klebstoffs auf das vordere Ende geklebt wird.

15. Verfahren nach Anspruch 13 oder 14, dadurch gekennzeichnet, daß der Gegenstand zwei einwärts gekrümmte Endteile mit zwischen die Wärmequellen und die beiden Enden der Folie gesetzten zugehörigen Zungen aufweist.

16. Verfahren nach Anspruch 13, 14 oder 15, dadurch gekennzeichnet, daß die Zunge oder die Zungen auch dazu benutzt wird oder benutzt werden, den oder jeden vorstehenden Teil gegen den Behälter zu legen.

17. Verfahren nach einem der vorhergehenden Ansprüche, dadurch gekennzeichnet, daß der oder jeder vorstehende Teil auf den Gegenstand wärmegeschrumpft wird, indem Wärme so zugeführt wird, daß der vorstehende Teil allmählich von seiner Verbindungsstelle mit dem bauchigen Hauptteil aus zu dem Außenrand des vorstehenden Teils hin geschrumpft wird, wodurch eine im wesentlichen blasenfreie Verbindung zwischen dem geschrumpften vorstehenden Teil und dem Gegenstand erreicht wird.

18. Verfahren nach Anspruch 18, dadurch gekennzeichnet, daß diese Gegenstände zunächst durch eine Umwickelzone bewegt werden, in der die Folie um den Gegenstand gelegt wird, und dann durch eine Zone, in welcher ein Heißluftstrom zugeführt und die Geschwindigkeit und/oder die Temperatur der Heißluft auf die Bewegungsgeschwindigkeit der Gegenstände abgestimmt wird.

19. Vorrichtung zum Aufbringen von wärmeschrumpfbarer Folie auf Gegenstände (10), die einen bauchigen Hauptteil (11) und mindestens einen an den bauchigen Teil anschließenden und von ihm aus einwärts verlaufenden Endteil (14, 15) aufweisen, welche Vorrichtung eine Einrichtung (55) zum Wickeln dieser Folie in flächiger Form in nicht geschrumpftem Zustand auf den bauchigen Hauptteil (11) der Gegenstände (10) und zum Befestigen der Folie an dem Hauptteil umfaßt, wobei ein vorstehender Teil (20, 21) über mindestens einen der Endteile (14, 15) hinausragt, ferner eine Einrichtung (60) zum Bewegen jedes solcherart umwickelten Gegenstands durch eine Erhitzungsstation zum Aufschrumpfen des vorstehenden Teils auf den oder jeden Endteil des Gegenstands, dadurch gekennzeichnet, daß eine Einrichtung zum Aufbringen von Kleber nur auf schmale Zonen der vorderen und der hinteren Kante (45, 44) des Folienabschnitts (16) zum Befestigen der Folie an dem Gegenstand vorgesehen sind, und daß die Erhitzungsstation eine Einrichtung (72) zur lokalen Zuführung von Wärme auf den oder jeden Vorstehenden Teil aufweist, wodurch jeder Filmabschnitt auf den bauchigen Teil jedes Gegenstands geklebt wird, ohne diesen Abschnitt zu schrumpfen.

20. Vorrichtung nach Anspruch 19, dadurch gekennzeichnet, daß die Umwickeleinrichtung eine Folienzuführung zur ununterbrochenen Zuführung von Folienmaterial (51) von einer Folienrolle (50) umfaßt, ferner eine Trennvorrichtung (54) zum Abtrennen von Folienabschnitten von dieser Zuführung, eine ständig umlaufende Vakuumtrommel (55), die zum Festhalten des vorderen Endes jedes abgetrennten Folienabschnitts dient, um den Abschnitt an der Oberfläche der Trommel haften zu lassen, ihn zu einer Auflegestation zu transportieren und ihn an dieser Station freizugeben, und eine zum fortlaufenden Transportieren von Behältern dienende Einrichtung (60), die Gegenstände fortlaufend in die genannte AUflegestation und anschließend in die Erhitzungsstation transportiert.

21. Vorrichtung nach Anspruch 20, dadurch gekennzeichnet, daß die Umwickeleinrichtung eine zum Transportieren dienende Einrichtung (60) umfaßt, die die Gegenstände der Reihe nach mit jeweils frei zugänglichem bauchigen Teil in eine Auflegestation zu transportieren vermag, ferner eine Einrichtung (55), die Folienabschnitte der Reihe nach, tangential ausgerichtet zu dem bauchigen Teil eines zugeordneten Gegenstands, in die genannte Auflegestation zu transportieren vermag, eine Einrichtung zum Festkleben dieses vorderen Endes an den Bauch des zugeordneten Gegenstands durch Zusammendrücken des vorderen Ende zwischen dem Behälter und der Einrichtung zum Tranportieren des Abschnitts, eine Einrichtung (25), die den Gegenstand (10) um seine Zylinderachse in Drehung versetzt, eine Einrichtung (70), die zum Herumwickeln des Abschnitts um den Bauch während der Drehbewegung dient, und eine tangential an dem Bauch des Gegenstands (10) anliegende Einrichtung (71) zum Ausüben von Anpreßdruck auf die aufeinanderliegenden Enden des Abschnitts, um das hintere Ende des Abschnitts an dessen vorderem Ende festzulegen.

22. Vorrichtung nach Anspruch 21, dadurch gekennzeichnet, daß eine vorschiebbare und zurückziehbare Einrichtung (119, 119a) einschiebbar ist, wenn sie zwischen den frei vorstehenden Rand oder die frei vorstehenden Ränder des Abschnitts und den Endteil oder die Endteile des Gegenstands ausgefahren ist, um in ausgefährener und eingeschobener Stellung eine Fortsetzung des bauchigen Teils des Gegenstands zu bilden und mit der tangential verlaufenden Einrichtung (71) zusammenzuwirken, um Druck auszuüben und eine Naht an der Überlappungsstelle des vorderen und des hinteren Endes des Abschnitts zu bilden, und daß eine Einrichtung vorgesehen ist, die die vorschiebbare und zurückziehbare Einrichtung taktmäßig so betreibt, daß diese während der Nahtbildung in den Zwischenraum zwischen dem frei vorstehenden Rande oder den frei vorstehenden Rändern des Abschnitts und den abgeschrägten Endteil oder die abgeschrägten Endteile des Behälters ausfährt und danach zurückfährt.

23. Vorrichtung nach Anspruch 21 oder 22, dadurch gekennzeichnet, daß die genannte Einrichtung für den Transport von Gegenständen die Form eines um eine feststehende Achse (61) sich drehenden Organs (60) hat und eine Mehrzahl von einander gegenüberstehenden Paaren von sich drehenden Spannfuttern (110, 110a) zum Festhalten gegenüberliegender Enden der Gegenstände (10) und zum Drehen der Gegenstände um ihre Zylinderachsen aufweist, wenn die Gegenstände sich im Umlauf um die genannte feststehende Achse bewegen.

24. Vorrichtung nach Anspruch 23, dadurch gekennzeichnet, daß die genannte Einrichtung zum Transportieren der Abschnitte als rotierende Vakuumtrommel (55) ausgebildet ist, die zum Aufnehmen von Abschnitten auf ihrer Oberseite in einer Abschnittaufnehmerstation, zum Festhalten jedes Abschnitts während der Drehbewegung auf ihrer Oberseite, zum Ausüben einer Druckkraft auf das vordere Ende des Abschnitts an der genannten Auflegestation und zur Freigabe jedes Abschnitts an den Behälter an der genannten Auflegestation dient.

25. Vorrichtung nach Anspruch 20, dadurch gekennzeichnet, daß eine Einrichtung (115, 89; 115a, 89a) zum Einschieben einer Zunge (119, 119a) zwischen die Wärmequelle und den Nahtabschnitt oder die Nahtabschnitte der Überlappung oder der Überlappungen während mindestens eines Teils des Wärmeschrumpfschritts vorgesehen ist, welche Zunge dazu dient, die Zuführung von Wärme auf den Nahtabschnitt oder die Nahtabschnitte zu vermindern.

26. Vorrichtung nach Anspruch 25, dadurch gekennzeichnet, daß die genannte Zunge (119, 119a) außerdem zum Andrücken der Überlappung auf den Behälter dient.

27. Vorrichtung nach Anspruch 26, dadurch gekennzeichnet, daß die genannte Wärmeabschirmungszunge einen verjüngten Endteil (120, 120a) zum Ausüben von Druck auf den Randteil oder die Randteile im ausgefahrenen Zustand besitzt, wodurch dieser Randteil oder diese Randteile gegen den Endteil oder die Endteile des Gegenstands gedrückt wird.

28. Vorrichtung nach Anspruch 19, dadurch gekennzeichnet, daß die Einrichtung (160a, 160b, 160c; 161a, 161b, 161c) zum Zuführen von Wärme so ausgebildet ist, daß die Wärme in einer Weise zugeführt werden kann, daß der oder jeder vorstehende Teil der Folie allmählich auf den Gegenstand geschrumpft wird, beginnend an der Stelle, an der die Folie mit dem bauchigen Teil des Gegenstands zusammentrifft, und sich fortsetzend zu dem Rande des vorstehenden Teils.

29. Gegenstand (10) mit einem bauchigen Hauptteil (11) mit vertikal verlaufender Oberfläche und mindestens einem an den bauchigen Hauptteil anschließenden und von ihm weg einwärts gekrümmten Endteil (14, 15), mit einer an den bauchigen Hauptteil angelegten, schrumpfbaren Folie, die über den genannten gekrümmten Endteil vorsteht, mit durch Wärmeschrumpfen in enge Anlage an den genannten gekrümmten Teil gebrachtem vorstehenden Teil, dadurch gekennzeichnet, daß zumindest der größere Teil der den genannten zylindrischen Bauch umspannenden Folie verhältnismäßig umgeschrumpft ist, und daß die einzige Klebeverbindung zwischen der Folie und dem Behälter an einem schmalen Streifen (46) an dem vorderen Rande der Folie vorliegt.

30. Gegenstand nach Anspruch 29, dadurch gekennzeichnet, daß keine Haftung zwischen dem vorstehenden Teil der Folie und dem gekrümmten Enteil des Gegenstands vorliegt.

31. Gegenstand nach Anspruch 29 oder 30, dadurch gekennzeichnet, daß der den vorderen Rand der Folie überlappende hintere Rand mit dem vorderen Rande durch eine schmale Klebstoffzone (47) fest verbunden ist.

32. Gegenstand nach einem der Ansprüche 29 bis 31, dadurch gekennzeichnet, daß es sich bei dem Klebstoff um Heißschmelzkleber handelt.

**Revendications**

1. Procédé pour appliquer une pellicule thermorétractable sur un objet (10) ayant une partie de corps principale verticale (11) et au moins une parpartie terminale (14, 15) qui s'incurve vers l'intérieur depuis la partie principale, ledit procédé comportant une application serrée de la pellicule (16) sur la partie de corps de l'objet sans thermorétraction, une petite saillie (20, 21) de la pellicule étant laissée sur au moins une telle partie terminale, puis l'application de chaleur sur la pellicule de façon que la pellicule saillante soit plaquée par thermo-rétraction sur l'objet, caractérisé en ce qu'avant l'application de chaleur, la pellicule est collée à la partie de corps par d'étroites régions (46, 47) d'adhésion seulement sur les bords antérieur et postérieur de la pellicule enveloppée autour de la partie de corps de l'objet.

2. Procédé selon la revendication 1, caractérisé en ce que le récipient a deux parties extrêmes opposées (14, 15) incurvées vers l'intérieur, et les deux parties supérieure et inférieure (20, 21) de la pellicule sont plaquées par thermorétraction sur le récipient.

3. Procédé selon l'une ou l'autre des revendications précédentes, caractérisé en ce que de la chaleur est appliquée à la pellicule saillante sensiblement sans être appliquée sur le corps principal de la pellicule, la pellicule étant une pellicule non rétractée quand elle est appliquée sur la partie de corps.

4. Procédé selon l'une quelconque des revendications précédentes, caractérisé en ce que ladite thermorétraction est provoquée en appliquant de l'air chaud sur la pellicule saillante à mesure que l'objet tourne autour de l'axe vertical de ladite partie de corps.

5. Procédé selon la revendication 4, caractérisé en ce que l'air chaud provient d'une buse allongée (40, 41) et l'objet (10) est amené, tout en tournant, à se déplacer le long de la buse.

6. Procédé selon l'une quelconque des revendications précédentes, caractérisé en ce qu'une alimentation continue de pellicule est séparée de façon continue en segments d'une longueur prédéterminée, et les segments séparés sont successivement transportés jusqu'à un poste d'application de pellicule où ils sont appliqués sur une série d'objets acheminés individuellement jusqu'à celui-ci.

7. Procédé selon l'une quelconque des revendications précédentes, caractérisés en ce que la chaleur appliquée pour thermorétracter la ou chaque partie débordante est appliquée en plusieurs étapes séparées pour provoquer une thermorétraction partielle lors de la première étape et une nouvelle thermorétraction à chaque étape ultérieure.

8. Procédé selon l'une quelconque des revendications précédentes, caractérisé en ce que les objets sont des récipients qui sont cylindriques et sont transportés de façon continue sur un parcours circulaire depuis un poste d'entrée de récipients jusqu'à un poste de sortie de récipients, les récipients étant amenés à tourner autour de leur axe longitudinal pendant ce transport, et l'extrémité antérieure de chaque segment de pellicule étant appliquée à l'aide d'une colle sur chaque récipient dans un poste d'application d'étiquettes située sur ledit parcours circulaire et étant enroulée autour du récipient du fait du mouvement de rotation du récipient.

9. Procédé selon la revendication 8, caractérisé en ce que le bord postérieur (44) de chaque segment de pelliculee est amené à chevaucher le bord antérieur (45) sur le récipient (10) et est collé à celui-ci en formant un joint.

10. Procédé selon la revendication 9, caractérisé en ce que l'application de chaleur est interrompue ou réduite chaque fois qu'un joint se trouve tout près de la source de chaleur.

11. Procédé selon la revendication 9 ou 10, caractérisé en ce que chaque objet et le segment qui lui est destiné sont transportés sur des parcours séparés jusqu'à une position où l'extrémité antérieure du segment est tangente au corps cylindrique de l'objet; une pression est appliquée dans cette position tangente entre le moyen de transport du segment et l'objet, avec un adhérence suffisante pour fixer l'extrémité antérieure du segment au corps cylindrique de l'objet; l'objet tourne avec le segment ainsi fixé pour enrouler le segment autour de l'objet afin de former un joint collant entre les extrémités postérieure et antérieure du segment, en formant de ce fait un objet avec un segment roulé de façon serrée à son corps et fixé par collage celui-ci, un ou plusieurs bords libres dépassant au-delà du corps; et une ou plusieurs languettes (119, 119a) sont interposées entre le bord ou les bords libres (20, 21) du segment (16) et la partie ou les parties terminales inclinées (14, 15) de l'objet pour réaliser un prolongement de ladite partie du corps afin de faciliter la formation du joint.

12. Procédé selon la revendication 11, caractérisé en ce que le segment est transporté par un tambour rotatif (55) à vide, l'objet est transporté par un moyen de transport rotatif (60) d'objet, les deux moyens de transport amènent l'extrémité antérieure de chaque segment de façon tangente au contact d'un objet, et le moyen de transport de l'objet, après la fixation de l'extrémité antérieure, fait tourner l'objet pour rouler le segment autour de lui.

13. Procédé selon l'une quelconque des revendications 1 à 10, caractérisé en ce que l'extrémité postérieure (44) de la pellicule (16) chevauche l'extrémité antérieure (45) de la pellicule et est collée à celle-ci pour former un joint latéral, et en ce que, pendant la thermorétraction de la ou de chaque partie saillante de la pellicule sur l'objet, une languette (119, 119a) est intercalée entre la source de chaleur et le joint latéral, cette languette servant à modérer l'application de chaleur sur le joint latéral.

14. Procédé selon la revendication 13, caractérisé en ce que l'extrémité postérieure de la pellicule est collée par de la colle à l'extrémité antérieure.

15. Procédé selon la revendication 13 ou 14, caractérisé en ce que l'objet a deux parties terminales incurvées vers l'intérieur, des languettes respectives étant intercalées entre les sources de chaleur et les deux extrémités de la pellicule.

16. Procédé selon la revendication 13, 14 ou 15, caractérisé en ce que la ou chaque languette sert aussi à pousser la ou chaque partie saillante contre le récipient.

17. Procédé selon l'une quelconque des revendications précédentes, caractérisé en ce que la ou chaque partie saillante est thermorétractée sur l'objet par application de chaleur de manière à provoquer une rétraction progressive de la partie saillante depuis sa jonction avec la partie principale du corps jusqu'au bord extérieur de la partie saillante, grâce à quoi une liaison sensiblement exempte de bulles est obtenue entre la partie saillante rétractée et l'objet.

18. Procédé selon la revendication 17, caractérisé en ce que lesdits objets sont amenés à se déplacer d'abord à travers une zone d'emballage où la pellicule est appliquée autour de l'objet, puis à travers une zone dans laquelle un courant d'air chaud est appliqué et la vitesse et/ou la température de l'air chaud est coordonnée avec la vitesse de déplacement des objets.

19. Dispositif pour appliquer une pellicule thermorétractable sur des objets (10) ayant une partie principale de corps (11) et au moins une partie terminale (14, 15) contiguë à la partie de corps et s'étendant vers l'intérieur depuis celle-ci, ledit dispositif comportant une moyen (55) pour enrouler cette pellicule sous forme de feuille à l'état non rétracté sur la partie principale de corps (11) des objets (10) et pour la fixer à celle-ci avec une partie saillante (20, 21) s'étendant sur au moins une partie terminale (14, 15), un moyen (60) pour déplacer chaque objet ainsi enveloppé à travers un poste de chauffage afin de provoquer la rétraction de la partie saillante sur la ou sur chaque partie terminale de l'objet, caractérisé en ce que des moyens sont prévus pour appliquer de la colle uniquement dans des régions étroites des bords antérieur et postérieur (45, 44) de la feuille (16) de pellicule pour fixer la pellicule à l'objet, et en ce que le poste de chauffage comporte un moyen (72) pour appliquer de la chaleur d'une manière localisée sur la ou sur chaque partie salliante, grâce à quoi chaque segment de pellicule est collé à la partie de corps de chaque objet sans thermorétraction de ce segment.

20. Dispositif selon la revendication 19, caractérisé en ce que le moyen d'enroulement comporte une alimentation en pellicule pour fournir de façon continue de la pellicule (51) depuis un rouleau (50) de celle-ci, un agencement de coupe continue (54) servant à détacher de cette alimentation des segments de pellicule, un tambour à vide (55) pouvant tourner de façon continue servant à saisir l'extrémité antérieure de chaque segment de pellicule détaché, à faire adhérer le segment à la surface du tambour, à transporter le segment jusqu'à un poste d'application et à relâcher le segment dans ce poste, et un transporteur continu (60) de récipients servant à transporter des objets de façon continue jusqu'audit poste d'application, puis jusqu'au poste de chauffage.

21. Dispositif selon la revendication 20, caractérisé en ce que le moyen d'enroulement comprend un transporteur (60) d'objets conçu pour transporter les objets successivement jusqu'à un poste d'application avec le corps de chaque objet accessible, un transporteur (55) de segments conçu pour transporter des segments de pellicule successivement jusqu'audit poste d'application, l'extrémité antérieure de chaque segment étant tangente au corps d'un objet correspondant, un moyen pour fixer par collage cette extrémité antérieure du corps de l'objet correspondant en comprimant l'extrémité antérieure entre le récipient et le transporteur de segments, un moyen (25) pour faire tourner l'objet (10) autour de son axe cylindrique, un moyen (70) servant pendant cette rotation à enrouler le segment autour du corps, et un moyen (71) tangent au corps de l'objet (10) pour l'application d'une pression aux extrémités se chevauchant du segment afin de fixer par collage l'extrémité postérieure à l'extrémité antérieure du segment.

22. Dispositif selon la revendication 21, caractérisé en ce que des moyens pouvant sortir et rentrer (119, 119a) sont insérables, quand ils sont sortis, entre le bord ou les bords libres du segment et la partie terminale ou les parties terminales de l'objet pour servir, quand ils sont en position sortie insérée, à réaliser un prolongement de la partie de corps de l'objet, et à coopérer avec ledit moyen tangent (71) pour appliquer une pression et former un joint au niveau du chevauchement des extrémités antérieure et postérieure du segment, et en ce que des moyens sont prévus pour faire fonctionner de façon cyclique ces moyens pouvant sortir et rentrer afin de les introduire dans l'espace existant entre le bord ou les bords libres du segment et la partie ou les parties terminales inclinées du récipient pendant la formation du joint, puis pour faire rentrer ces moyens.

23. Dispositif selon la revendication 21 ou 22, caractérisé en ce que ledit transporteur d'objets se présente sous la forme d'un organe rotatif (60) tournant autour d'un axe fixe (61) et qui comporte une pluralité de paires opposées de mandrins rotatifs (110, 110a) pour serrer les extrémités opposées des objets (10) et faire tourner ceux-ci autour de leur axe cylindrique à mesure qu'ils tournent en orbite autour dudit axe fixe.

24. Dispositif selon la revendication 23, caractérisé en ce que ledit transporteur de segments se présente sous la forme d'un tambour rotatif à vide (55) servant à prélever des segments sur sa surface à un poste de prélèvement de segments, à retenir chaque segment sur sa surface pendant la rotation, à appliquer une pression contre l'extrémité antérieure du segment au niveau dudit poste d'application, et à relâcher le segment sur le récipient dans ledit poste.

25. Dispositif selon la revendication 20, caractérisé en ce que des moyens (115, 89; 115a, 89a) sont prévus pour intercaler une languette (119, 119a) entre la source chaleur et la partie ou les parties formants joints du chevauchement ou des chevauchements pendant au moins une partie de l'étape de thermorétraction, ladite languette servant à modérer l'application de chaleur sur la partie ou les parties formant joints de ceux-ci.

26. Dispositif selon la revendication 25, caractérisé en ce que ladite languette (119, 119a) est également conçue pour pousser la partie chevauchante contre le récipient.

27. Dispositif selon la revendication 26, caractérisé en ce que ladite languette protégeant de la chaleur a une partie terminale conique (120, 120a) pour appliquer une pression sur la partie ou les parties formant bords au moment où elle est sortie, en poussant de ce fait cette partie ou ces parties formant bords vers la partie ou les parties terminales de l'objet.

28. Dispositif selon la revendication 19, caractérisé en ce que le moyen (160a, 160b, 160c; 161a, 161b, 161c) pour appliquer de la chaleur est conçu pour appliquer de la chaleur de manière à provoquer la rétraction progressive de la ou de chaque partie saillante de la pellicule sur l'objet en commençant à la jonction de celle-ci avec la partie formant corps de l'objet, jusqu'au bord de la partie saillante.

29. Objet (10) ayant une partie principale de corps (11) ayant une surface verticale et au moins une partie terminale (14, 15) contiguë à la partie principale de corps et s'incurvant vers l'intérieur depuis celle-ci, une pellicule thermorétractable étant collée à la partie principale formant corps et débordant sur ladite partie terminale incurvée, la partie saillante de la pellicule étant plaquée par thermorétraction contre ladite partie incurvée, caractérisé en ce qu'au moins la majeure partie de la pellicule entourant ledit corps cylindrique est relativement non rétractée, et en ce que la seule adhérence à l'aide de colle de la pellicule sur le récipient est réalisée sur une bande étroite (46) au niveau du bord antérieur de la pellicule.

30. Objet selon la revendication 29, caractérisé en ce qu'il n'y a pas d'adhérence entre la partie saillante de la pellicule et la partie terminale incurvée de l'objet.

31. Objet selon la revendication 29 ou 30, caractérisé en ce que le bord postérieur de la pellicule chevauchant le bord antérieur de la pellicule est fixé au bord antérieur par une étroite région (47) de matière adhésive.

32. Objet selon l'une quelconque des revendications 29 à 32, caractérisé en ce que la matière adhésive est de la colle thermofusible.

FIG. 1

FIG. 2

FIG. 3

FIG. 4

FIG. 5

FIG. 6

EP 0 095 882 B1

FIG. 7

FIG. 8 a

FIG. 8 b

FIG. 9 a

FIG. 9 b

FIG. 10

FIG. 11

133
12a          12a
55           137
130
131          132

135
20
16
134
21
136

FIG. 12a

56
16

FIG. 12b

142  143
110
141
140
10

FIG. 13

FIG. 14a

FIG. 14b

FIG. 14c

FIG. 15

FIG. 16

FIG. 17

FIG. 18